# EUROPEAN PATENT APPLICATION

(11) **EP 1 581 000 A1**
(43) Date of publication of application: **28.09.2005**
(21) Application number: 04006970.0
(22) Date of filing: 23.03.2004
(51) Int. Cl.: H04N 7/16, H04H 9/00, G03G 15/00

(54) **Instant personal TV voting**

(71) Applicant: Paetsch, Michael, Dr., 47877 Willich (DE)
(72) Inventor: Paetsch, Michael, Dr., 47877 Willich (DE)
(74) Representative: Maiwald Patentanwalts GmbH

(57) **Abstract**

A device for a content based evaluation of a media message transmitted from a subscriber station is provided. The devices makes it possible for the user to participate in a TV game with the feel of real-time scratch and win determination. After receiving the media message transmitted from the subscriber station, an evaluation unit performs a content-based evaluation of this message and prints information associated with the media message on objects.

## Description

### Field of the Invention

The present invention relates to the field of voting devices or media message processing devices.

### Technological Background

DE 100 32 392 A1 discloses a method for fully automatic production of printed matter by a modular system on the basis of an electronic data bank, comprising a central logistic module for automatic control of the whole production system via a data bank system and for the control of the further modules, a communication module, for example internet-module or SMS-(Short Message-System)-module as front-end for the user, a data-bank controlled prepress for fully automatic building of the setting copies and the printing of the accompanying documents.

DE 100 34 700 A1 discloses a method for automatic processing of SMS messages with the help of a server setup, which can exchange information with a mobile radio network. Further a device for the use by the method is disclosed.

DE 101 18 766 A1 discloses a computer controlled reservation-call-device for marks of a waiting list for shops and administrative bodies having access to the internet.

US 5 772 511 discloses a method for conducting lotteries which combines instant games and on-line games by beginning with the purchase of a single instant game ticket by a player. The instant game is played and, win or lose, the instant game ticket is presented for verification. The transmission of the results of the verification directs payment as to winning tickets and directs continuing play of an on-line game for all tickets.

The participant of games today mostly wants to have a quick access to the game and at the same time a quick access to the result. In the state of the art it is not possible, to participate in competitions and lotteries by subscriber station, especially via SMS, and to receive the result, win or lose, within minutes. As a consequence the participant mostly has not the feeling to be really a participant of the game, because he does not see the influence or effect of his voting on the result. In addition to that it is not possible to backtrack the printing of a competition or lottery to the message generating subscriber station. Also, there is no control with respect whether his vote or bet is actually part in e.g. a lottery wheel. The drawing process of the winner ticket is intransparent to the participant.

In the state of the art the participant mostly has the opportunity to participate by phoning. If the only opportunity to participate is by phoning, very often the phone line is overloaded and the participant has to undergo many attempts to reach the sender. And if he reaches the sender, he has to give his number in order to be identified and to be contacted again. This involves a certain risk of misunderstandings for example by wrong cited phone numbers.

In the state of the art an SMS can be received and answered, but there is no technical condition given to perform a content-based evaluation of the message, whereby the result of the evaluation is accessible to the participant very soon.

### Summary of the invention

According to an exemplary embodiment of the present invention as set forth in claim 1, a device is provided comprising a receiving unit for receiving a media message transmitted from the subscriber station, an evaluation unit for performing a content-based evaluation of the media message, an output unit for printing information associated with the media message on an object and an allocation unit for performing an allocation of the media message on the basis of the content-based evaluation, such, that a content-based allocation of the respective object on which the respective information associated with the media-message is printed, to a container of a plurality of containers is performed.

According to another exemplary embodiment of the present invention, a receiving unit is provided, which receives a media message from a subscriber station for forwarding it to the server. This media message can be a numeric, non-numeric or an alphanumeric code. Alternatively the only task of the media message can be to transmit the mobile number of the sender.

In this context, a subscriber station can be a POTS (plain old telephone system), a mobile station or an ISDN telephone.

Advantageously, according to another exemplary embodiment of the present invention, the media message sent by the mobile can be an SMS.

According to another exemplary embodiment of the present invention, an evaluation unit, i.e. a server, for a content-based evaluation of the media message is provided. The content of the media message is analyzed and leads to a decision of the server. This decision is forwarded to the output unit or the allocation unit.

According to another exemplary embodiment of the present invention, an allocation unit is provided for performing an allocation of the media message on the basis of the content-based evaluation, such, that a content-based allocation of the respective object on which the respective information associated with the media-message is printed, to a container of a plurality of containers is performed.

According to another exemplary embodiment of the present invention, all printed objects are collected in one container, whereby objects of different colours, depending on the evaluation result, are printed.

According to another exemplary embodiment of the present invention, two container represent two possible answers, for example "Yes" or "No". Depending on the result printed on the objects, all objects printed with "Yes" become allotted to the container representing "Yes", whereas all objects printed with "No" become allotted to the container representing "No".

According to another exemplary embodiment of the present invention, more than two containers represent more than two possible answers, for example the name of candidates, who can be voted. For example if six answers are possible, all objects printed with the votings of the participant become allotted to six containers, each container representing one possible answer.

In another exemplary embodiment of the present invention, the container can be used as part of vital importance in a competition or a lottery, whereby the "winner" is selected out of one container, for example the container with printed objects representing "Yes" if "Yes" is the condition for being selected out, and the winner may then be contacted by his mobile number printed on the object.

According to another exemplary embodiment of the present invention as set forth in claim 2, the unit receiving the media message generates an automatic confirmation of receipt to the sender.

According to yet another exemplary embodiment of the present invention, the evaluation of the media message can be transmitted from the evaluation unit back to the receiving unit back to the mobile. For example, if the participant of a competition or a lottery has to decide between two answers, for example "Yes" or "No", he can receive a feedback from the receiving unit whether his answer was right or wrong.

According to another exemplary embodiment of the present invention as set forth in claim 5, after content-based evaluation the information associated with the media message is transmitted from the evaluation unit to the output unit or the allocation unit.

According to yet another exemplary embodiment of the present invention, the output unit prints a portion of the media message as well as an identification number of the subscriber station on the object, which allows identification of individual sender within the drawing process.

One media message transmitted via mobile may finally lead to one printed object, whereby the station number of the sender is printed on the object too. As a consequence, every printed object can be identified and be referred to the corresponding sender. After printing, the printed objects are forwarded to the allocation unit.

Advantageously, according to this exemplary embodiment of the present invention, only "Yes" or "No" is printed in combination with the mobile number of the sender on the objects, if the participant of the competition or lottery has to choose only between these two answers.

According to another exemplary embodiment of the present invention, a special colour is selected for a special answer, for example "Red" for "No" and "Green" for "Yes", and only the mobile number is printed on the object, after the colour, on which the number is printed, is selected depending on the transmitted media message of the sender.

Advantageously, according to another exemplary embodiment of this present invention, if, for example, the participant has the choice between six different answers, six colours can be chosen, one special colour representing one special answer. In this example, all printed objects with different colours can be allotted to different containers, each container representing one colour, or all printed objects with different colours can be allotted to one single container.

According to another exemplary embodiment of the present invention, only the number of the subscriber station is printed on the object.

According to another exemplary embodiment of the present invention as set forth in claim 6, the output unit is a printer.

Advantageously, according to another exemplary embodiment of the present invention, the objects are balls. After allocation, the globes are collected in the container.

According to another exemplary embodiment of the present invention the participant has the possibility to watch the influence of his message on the result of the evaluation soon after sending.

In this context "soon" means a time range from real time or a few seconds to a few hours.

According to another exemplary embodiment of the present invention as set forth in claim 9, a method for a content-based evaluation of a media message transmitted from a subscriber station to the device is provided, the media message having a content, the method comprising the steps of receiving a media message by a receiving unit from a subscriber station, forwarding this message to an evaluation unit for performing a content-based evaluation of the media message, forwarding this media message to an output unit for printing information associated with the media message on an object, and allocating the media message by an allocation unit on the basis of the content-based evaluation, such, that a content-based allocation of the respective object on which the respective information associated with the media message is printed, to a container of a plurality of containers is performed.

The present invention relates also to a computer program which may, for example, be executed on a processor, such as an image processor. The computer program according to exemplary embodiments of the present invention is set forth in claim 10. The computer program may preferably be loaded into a working memory of a data processor. The data processors are thus equipped to carry out exemplary embodiments of the methods of the present invention. The computer program may be stored on a computer readable medium such as CD-ROM. The computer programs may also be presented over a network such as the Worldwide Web, and may be downloaded into the working memory of a data processor from such networks.

It may be seen as the gist of an exemplary embodiment of the present invention that a content-based evaluation of a media message transmitted from a subscriber station to the device can be performed, whereby the results in combination with the number of the subscriber station, or only the number of the subscriber station are printed very soon on objects which are allocated to a container in accordance with the content. Furthermore the device makes it possible to identify the sender of the media message by the printed object.

These and other aspects of the present invention will become apparent from and elucidated with reference to the embodiments described hereinafter.

Exemplary embodiments of the present invention will be described in the following, with reference to the following drawings:
Fig. 1 shows a schematic diagram of an arrangement according to an exemplary embodiment of the present invention.
Fig. 2 shows a schematic diagram of an arrangement for performing an automatic confirmation of the media message according to an exemplary embodiment of the present invention.
Fig. 3 shows a schematic diagram of another arrangement according to an exemplary embodiment of the present invention.
Fig. 4 shows a schematic diagram of another arrangement according to an exemplary embodiment of the present invention.
Fig. 5 shows a schematic diagram of another arrangement according to an exemplary embodiment of the present invention.
Fig. 6 shows a schematic view of the printed objects according to an exemplary embodiment of the present invention.
Fig. 7 shows a schematic diagram of another arrangement according to an exemplary embodiment of the present invention.

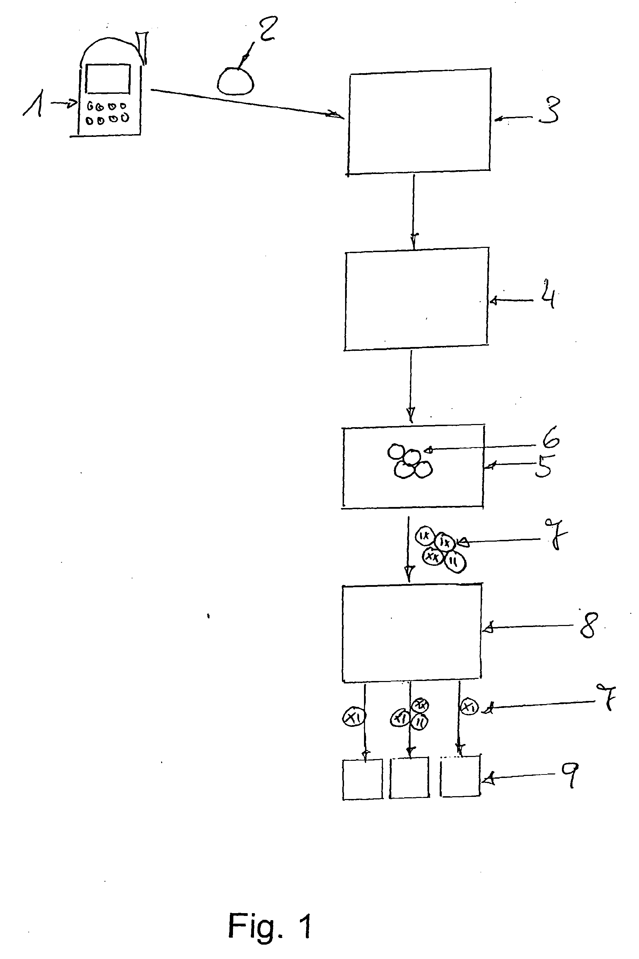

For the description of Fig. 1-7, the same reference numerals are used for the same or corresponding elements.

Fig. 1 shows a schematic diagram of an arrangement according to an exemplary embodiment of the present invention. A media message 2 is sent from the subscriber station 1 to the receiving unit 3 and forwarded to the evaluation unit 4. After a content-based evaluation of the media message the message is forwarded to the output unit 5 for printing information associated with the media message on an object 6. The printed objects 7 are allocated by an allocation unit 8 on the basis of the content-based evaluation, such, that a content-based allocation of the respective object on which the information associated with the media-message is printed, to a container 9 of a plurality of containers is performed.

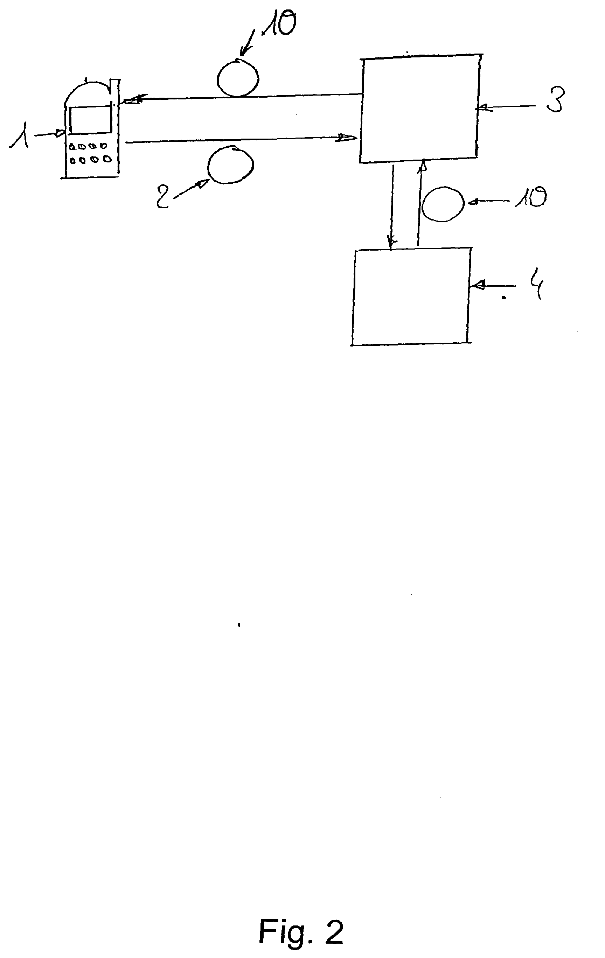

Fig. 2 shows a schematic diagram of an arrangement according to another exemplary embodiment of the present invention, wherein a media message 2 is sent from a subscriber station 1 to the receiving unit 3 and forwarded to the evaluation unit 4. The evaluation unit 4 generates an automatic confirmation of receipt 10, which is forwarded back to the receiving unit 3 back to the subscriber station 1.

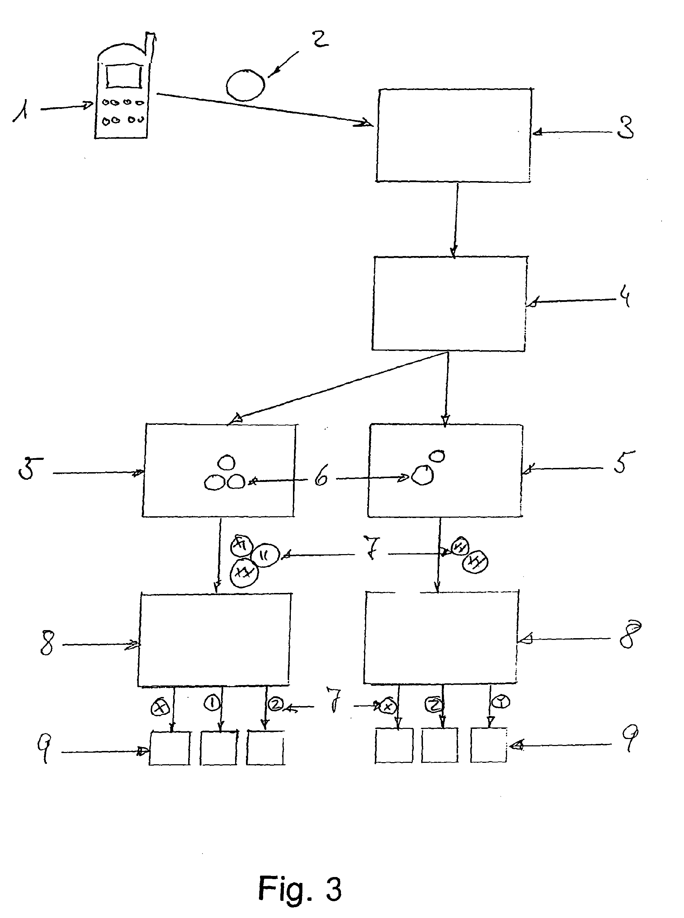

Fig. 3 shows a schematic diagram of another arrangement according to an exemplary embodiment of the present invention. A media message 2 is sent from the subscriber station 1 to the receiving unit 3 and forwarded to the evaluation unit 4. After a content-based evaluation of the media message the message is forwarded to different output units 5 for printing information associated with the media message on an object 6. The printed objects 7 are allocated by an allocation unit 8 on the basis of the content-based evaluation, such, that a content-based allocation of the respective object on which the information associated with the media-message is printed, to a container 9 of a plurality of containers is performed.

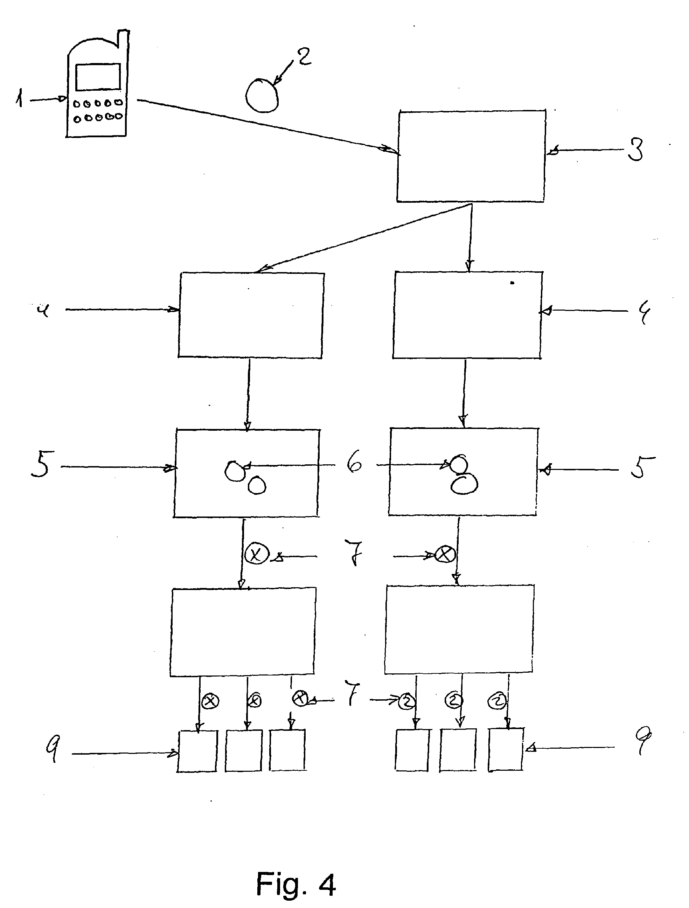

Fig. 4 shows a schematic diagram of another arrangement according to another exemplary embodiment of the present invention. A media message 2 is sent from the subscriber station 1 to the receiving unit 3 and forwarded to different evaluation units 4. After a content-based evaluation of the media message the message is forwarded to different output units 5 for printing information associated with the media message on an object 6. The printed objects 7 are allocated by an allocation unit 8 on the basis of the content-based evaluation, such, that a content-based allocation of the respective object on which the information associated with the media-message is printed, to a container 9 of a plurality of containers is performed.

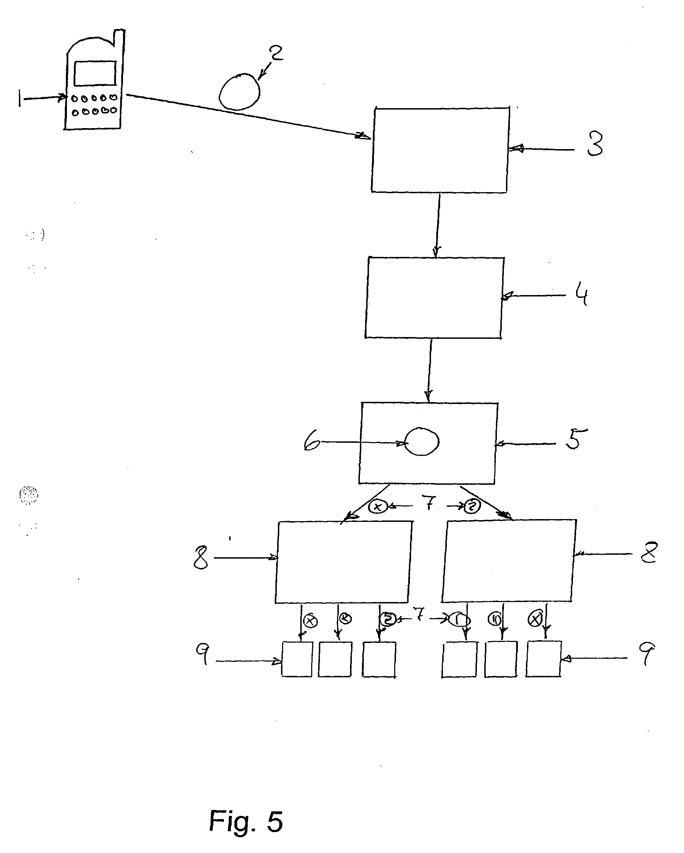

Fig. 5 shows a schematic diagram of another arrangement according to another exemplary embodiment of the present invention. A media message 2 is sent from the subscriber station 1 to the receiving unit 3 and forwarded to an evaluation unit 4. After a content-based evaluation of the media message the message is forwarded to an output unit 5 for printing information associated with the media message on an object 6. The printed objects 7 are allocated by different allocation units 8 on the basis of the content-based evaluation, such, that a content-based allocation of the respective object on which the information associated with the media-message is printed, to a container 9 of a plurality of containers is performed.

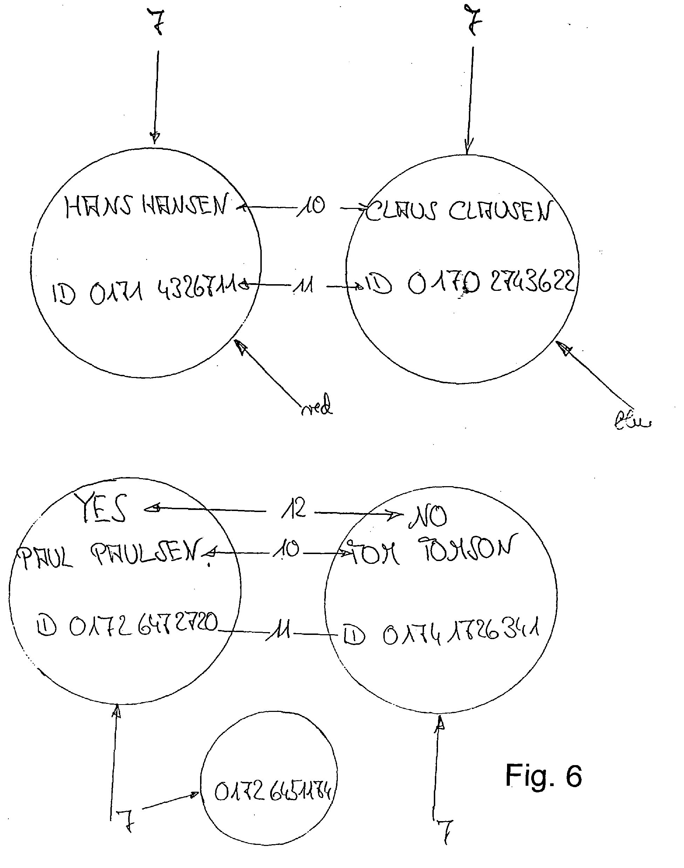

Fig. 6 shows a schematic diagram of the printed objects 7 according to another exemplary embodiment of the present invention. The printed objects 7 can be of different colours like red, blue, green or any colour. The printed objects 7 can wear the name of the sender 10 as well as the number of the sending subscriber station 11. In this exemplary embodiment a special colour represents a special message, for example the colour "green" represents "Yes", whereas the colour "red" represents "No".
In another exemplary embodiment the printed object wear a special information associated with the media message, for example the answer "Yes" or "No" 12. Additionally, the printed objects 7 wear the name of the sender 10 as well as the number of the sending subscriber station 1.

In another exemplary embodiment the printed object wear only the number of the sending subscriber station.

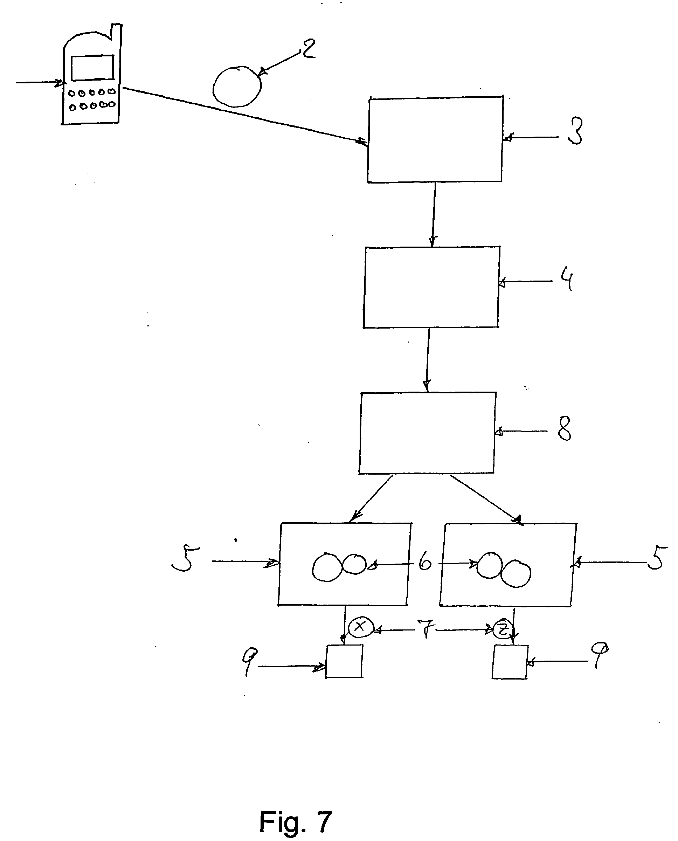

Fig. 7 shows a schematic diagram of another arrangement according to another exemplary embodiment of the present invention. A media message 2 is sent from the subscriber station 1 to the receiving unit 3 and forwarded to an evaluation unit 4. After a content-based evaluation of the media message the message is forwarded to an allocation unit 8 for allocation on the basis of the content-based evaluation, such, that a content-based allocation of the different messages to different output units 5 is performed.

The message is forwarded to different output units 5 for printing information associated with the media message on an object 6. The printed objects 7 are forwarded to a container 9 of a plurality of containers.

Fig. 7 shows a schematic representation of another exemplary embodiment of the device according to the present invention. As may be taken from Fig. 7, a subscriber station 1 such as a mobile phone (but also a computer laptop, PDA or any other device suitable for sending a media message such as an SMS) sends a media message to receiving unit 3 which may for example be a server of a computer system. The media message may be transmitted from the subscriber station 1 to the receiving station 3 via for example a mobile telecommunication system, via a plain old telephone system, via a mobile network such as WLAN or any other suitable network connection.

The received media message is forwarded to the evaluation unit 4. The evaluation unit 4 performs an evaluation of the content contained in the media message. For example, an identification number such as a phone number and/or name of the sender 1 or the owner of the sender 1 is identified. Furthermore, a content of the media message is identified. If for example in a quiz show a question is asked at which year a particular event happened, this particular year is identified in the evaluation unit 4. Or for example in a TV-show like "American Idol", a name of a competitor indicated in the media message is identified. Than, the evaluated content and the media message are forwarded to an allocation unit 8. The allocation unit 8 performs on the basis of the evaluated content an allocation of the respect for media message to one of two output units 5. With respect to the above example of the quiz asking for the indication of the correct year of an event, all correct answers are allocated to the output unit 5 on the right side of Fig. 7 and all the wrong answers are allocated to the output unit 5 on the left side of Fig. 7. Than the output unit 5, which may be printers, print, attach or associate certain objects, such as balls or paper, with the media message. Than, the objects are output to respect ones of containers 9. Thus, in accordance with the above example of the question with respect to the correct year when a certain event happened, all the correct answers are now in the container 9 on the right side of Fig. 7, whereas the wrong answers are in the container 9 of the left side of Fig. 7.

When for example the device depicted in Fig. 7 is used in a TV format such as "American Idol", a number of containers and output units is provided corresponding to the number of competitors. Than, the allocation units locate all media messages concerning a certain competitor to a certain output unit associated with a respective container. After a certain time has passed during which spectators are allowed to vote, the containers all are filled with the media messages relating to the respective competitors. At the end of the show (time period) a competitor who has received the highest number of media messages is the winner. Than, for example, a lottery can be performed such that the winner draws one of the objects in the respective container, the sender associated therewith who may then be selected as the winner of a parallel lottery. The winner may then directly contact the sender of the respective media message due to the identification number printed on the object.

Advantageously, during the voting, a high score becomes evaluated, and becomes displayed on the TV screen ore the evaluation unit.

Advantageously, due to the fact that more or less in real-time, the media message sent by the participant is put into a container associated with the selection (i.e. the content) of the sender of the media message, when such device is used at a TV-show, the participant or sender of the media message is able to follow immediately the process in which the message he has sent is put into one container. The transparency of this process amplifies the attractiveness for viewers taking part in these telephone or media message lotteries. This increases the creditability in telephone or media message votes.

A participant, who wants to take part in games on TV, can send an SMS to the TV station. The SMS can contain only the number of the subscriber station, or additionally the name of the sender, a special information, for example his opinion to a special question, his voting for one of, for example, 6 candidates, or only the message "Yes" or "No".

If a participant wishes to take part in a game, for example a lottery in combination with a soccer game on TV, he can send his prediction of the result via SMS to the television station. He can do this in combination with sending his name or not. The prediction is received by the receiving station, forwarded to the evaluation unit and from there forwarded to the output unit, respective to the allocation unit and from there to the output unit, where the prediction is printed on an object. The number of the subscriber station is printed on the object too. In another embodiment, for example if only the winner of the sport game has to be predicted and not the result, the number of the subscriber station is printed on objects of different colours, for example yellow for team "A" and green for team "B".

The printing of media messages on coloured objects has the advantage, that the selection of the objects is more comprehensible to the spectator. A brief glance of the viewer is sufficient to differentiate different colours of objects. So the course of the show is much more thrilling to the viewer.

Afterwards, the printed objects are allocated to different container, whereby every container represents one result, for example the first container represents 0:0, the next container 1:0, the next 0:1 1 and etc. The printed objects are collected before respective during the sport event. After the end of the event, the container, which represents the actual result of the game, becomes the container, from which the winner is selected out.

On well-known soccer player, for example David Beckam, takes out one object of this container. Here a big advantage of the device is obvious: the message, the participant has sent a few minutes before, is evaluated, printed and allocated within a few seconds or minutes, and is now part of the game. The participant has the opportunity to participate and to intervene in the game at every time point during the broadcasting. If he has predicted the right result he knows, that the object printed with his mobile number is now in the container, from which the winner will be selected. This object is shown on the TV-screen and the number of the subscriber station will be the number of the winner.

When the participants see the number of the subscriber station on the object, they indeed have the feeling to be an authentic participant of an really authentic game.

The sender of the subscriber station can be contacted and can be asked for his opinion about the game, his prediction of the result or whatsoever. So the winner can be integrated in the further game and start a talk with David Beckam.

In another embodiment the participant has the opportunity to send a poem or a funny slogan or his opinion to any question or anything else like this. Participants, for example young girls, are invited to send a little poem, a home-written text of a song or an invitation to a pop star, for example Robbie Williams.

The media message sent by SMS is received by the receiving station, forwarded to the evaluation unit and from there forwarded to the output unit to the allocation unit, respective to the allocation unit and from there to the output unit, where the little poem, the home-written text of a song or the invitation is printed on an object. Then the printed objects are allotted to different container by an allocation unit or printed after allocation to different output units.

The host of the show or any person, preferably a person well known in the media, in this example Robbie Williams, takes the objects out of the container. For example he takes five objects out of the container, and the texts on the objects are shown on the TV screen and read out to the viewer.

Now the other viewer have the opportunity to choose out the best slogan, the best poem, the best song-text or whatsoever. Or as an exiting variation the pop star or media star self chooses among the media messages, which slogan, poem song-text he favourites. The subscriber station, from which the slogan, poem or opinion was sent, is contacted. The owner of the subscriber station has now the opportunity to have a live conversation with the media star and to arrange a date or anything else. The viewer is really a part of the game, his access is his SMS.

In another example the participants are visitors of a game show. They are sitting in the venue. After a question or a special invitation, they have the opportunity to send an SMS. If the game is a quiz, the winner can be the person, who sends the right answer at first. When the SMS is received by the receiving station it is forwarded to the evaluation unit and the output unit respective the allocation unit. After printing the content of the SMS on the object, it is easy to identify the sender and to contact him. After contacting the winner, the person can be invited to come the stage of the venue and be participant in the game played with the persons at the stage.

One essential advantage of the device disclosed above is, that nearly every visitor has the opportunity to participate very easy, because today more or less every person has the technical precondition to send a media message especially an SMS.

Over and above that, during a broadcasting it is very easy to identify the sender of the SMS, misunderstandings concerning a misspelled number are more or less impossible.

In another embodiment of the invention the viewer have the opportunity to send an SMS to the receiving station concerning a given question or special theme. The media message sent by SMS is received by the receiving station, forwarded to the evaluation unit and from there forwarded to the output unit and the allocation unit, respective to the allocation unit and there to the output unit, where the media message is printed on an object. Then the objects are allotted after printing to different container by an allocation unit or printed after allocation to different output units. Afterwards one object is chosen among the other, the number is read out and the originator of the message is contacted.

Now a second printed object is chosen out. The sender of the first message chosen out now has to contact the sender of the second message, and the sender of the second message has to contact the sender of the third message and so on. So the device claimed by the invention makes it possible to create a telephone chain live during the broadcasting.

A media star, part of the broadcasting, has the opportunity to interact with the persons involved in the telephone chain, and to choose out the winner of the game.

In another embodiment of the invention, the viewer of the lottery or game has the opportunity to participate by sending an MMS (multi media service), for example a funny or interesting picture of himself. The MMS messages are received by the receiving station, forwarded to the evaluation unit and from there forwarded to the output unit and the allocation unit, respective to the allocation unit and there to the output unit, where the media message is printed on an object. Then the objects are allotted after printing to different container by an allocation unit or printed after allocation to different output units. The other spectator or the person present in the broadcasting have to choose out the most interesting, the most funny picture or whatsoever. Afterwards one object is chosen among the other, the message is shown and the originator of the message can be contacted.

## Claims

1. Device for a content-based evaluation of a media message (2) transmitted from a subscriber station (1) to the device, the media message (2) having a content,
wherein the device comprises:
a receiving unit (3) for receiving the media message (2) transmitted from the subscriber station (1);
an evaluation unit (4) for performing a content-based evaluation of the media message (2);
an output unit (5) for printing information associated with the media message (2) on an object (6); and
an allocation unit (8) for performing an allocation of the media message (2) on the basis of the content-based evaluation, such, that a content-based allocation of the respective printed object (7) on which the respective information associated with the media-message is printed, to a container (9) of a plurality of containers is performed.

2. Device for a content-based evaluation of a media message (2) transmitted from a subscriber station (1) to the device according to claim 1,
wherein the receiving unit (3) gives an automatic confirmation of receipt (10) to the sender.

3. Device for a content-based evaluation of a media message (2) transmitted from a subscriber station (1) to the device according to claim 1 and 2,
wherein the media message is an SMS.

4. Device for a content-based evaluation of a media message (2) transmitted from a subscriber station (1) to the device according to claim 1 and 2,
wherein the media message is an MMS.

5. Device for a content-based evaluation of a media message (2) transmitted from a subscriber station (1) to the device according to one of the preceding claims,
wherein after content-based evaluation the information associated with the media message (2) is transmitted from the evaluation unit (4) to the output unit (5) or the allocation unit (8); and
wherein the output unit (5) prints a portion of the media message (2) as well as an identification number of the subscriber station (1) ore only the identification number of the subscriber station (1) on the object (6).

6. Device for a content-based evaluation of a media message (2) transmitted from a subscriber station (1) to the device according to one of the preceding claims,
wherein the output unit (5) comprises a printer for generating a printout.

7. Device for a content-based evaluation of a media message (2) transmitted from a subscriber station (1) to the device according to one of the preceding claims,
wherein the allocation of the object (8) is performed such that it is observable by the sender of the media message (2).

8. Device for a content-based evaluation of a media message (2) transmitted from a subscriber station (1) to the device according to one of the preceding claims,
wherein a high score is evaluated and displayed on the TV screen or the evaluation unit.

9. Use of a device for a content-based evaluation of a media message (2) transmitted from a subscriber station according to one of the preceding claims for a TV show.

10. A method for a content-based evaluation of a media message (2) transmitted from a subscriber station (1) to a device, the media message (2) having a content,
wherein the method comprises:
receiving a media message (2) by a receiving unit (3) from the subscriber station (1);
forwarding this media message (2) to an evaluation unit (4) for performing a content-based evaluation of the media message (2);
forwarding this media message (2) to an output unit (5) for printing information associated with the media message (2) on an object (6);
and allocating the media message (2) by an allocation unit (8) on the basis of the content-based evaluation, such, that a content-based allocation of the respective object (6) on which the respective information associated with the media message (2) is printed, to a container (9) of a plurality of containers is performed.

11. A computer program for performing a content-based evaluation of a media message (2) transmitted from a subscriber station (1) to a device, the media message having a content, wherein the computer program causes a processor to perform the following operation when the computer program is executed on the processor:
receiving a media message (2) by a receiving unit (3) from the subscriber station (1);
forwarding this media message (2) to an evaluation unit (4) for performing a content-based evaluation of the media message (2);
forwarding this media message (2) to an output unit (5) for printing information associated with the media message (2) on an object (6);
and allocating the media message (2) by an allocation unit (8) on the basis of the content-based evaluation, such, that a content-based allocation of the respective object (6) on which the respective information associated with the media message (2) is printed, to a container (9) of a plurality of containers is performed.
